# EUROPÄISCHE PATENTSCHRIFT

(11) **EP 1 157 602 B1**
(45) Veröffentlichungstag und Bekanntmachung des Hinweises auf die Patenterteilung: **11.05.2005**
(21) Anmeldenummer: 01111731.4
(22) Anmeldetag: 15.05.2001
(51) Int. Cl.: A01D 34/64

(54) **Einstellvorrichtung, Anbaugerät und Gerät bzw. Fahrzeug**
Adjustment device , mounted implement and implement
Dispositif de réglage , appareil porté et appareil

(30) Priorität: 24.05.2000 US 577303
(43) Veröffentlichungstag der Anmeldung: 28.11.2001
(73) Patentinhaber: DEERE & COMPANY, Moline, Illinois 61265-8098 (US)
(72) Erfinder: Brewer, Clay David, Willow Springs, NC 27592 (US); Wobig, Eric Charles, Green Bay, WI 54304 (US)
(74) Vertreter: Magin, Ludwig Bernhard

(56) Entgegenhaltungen:
- EP-A- 0 245 824
- JP-A- 9 098 631
- US-A- 3 657 866
- US-A- 4 313 295
- US-A- 4 325 211
- US-A- 4 840 020

## Beschreibung

Die Erfindung betrifft ein Anbaugerät gemäß dem Oberbegriff des Patentanspruchs 1 sowie ein Fahrzeug bzw. Gerät.

Die US-A-4,715,168 zeigt eine Höheneinstellvorrichtung für ein an der Frontseite eines Fahrzeugs angebrachtes Mähwerk. Der vordere Bereich eines Stützrahmens des Mähwerks stützt sich über ein Paar von Rädern auf dem Untergrund ab. Der Stützrahmen weist Arme auf, die einenends mit dem Mähwerk gelenkig verbunden sind und andernends über an dem Mähwerk angebrachte Halter mit mehreren Löchern verstellbar an dem Mähwerk vorgesehen sind.

Die JP-A-09 098631 zeigt ein Anbaugerät in der Art eines Sichelmähwerks mit einer Einstelleinrichtung, welche Einstellarme aufweist. Das Anbaugerät ist mit den Einstellarmen derart verbunden, dass an dem Anbaugerät in einem vorderen und einem rückwärtigen Bereich Konsolen vorgesehen sind, welche jeweils mehrere Öffnungen zur Einstellung des Abstands des Sichelmähwerks vom Boden vorgesehen sind.

Das der Erfindung zugrunde liegende Problem wird in der großen Bauhöhe und der aufwendigen Ausführung bekannter Einstellvorrichtungen und somit der mit solchen Einstellvorrichtungen ausgestatteten Anbaugeräte bzw. Fahrzeuge/Geräte gesehen.

Dieses Problem wird erfindungsgemäß durch die Lehre der Patentansprüche 1 bzw. 10 gelöst, wobei in den weiteren Patentansprüchen die Lösung in vorteilhafter Weise weiterentwickelnde Merkmale aufgeführt sind.

Auf diese Weise wird eine Einstellvorrichtung bzw. ein Anbaugerät mit einer solchen Einstellvorrichtung bzw. ein Fahrzeug/Gerät mit einem mit einer solchen Einstellvorrichtung ausgestatteten Anbaugerät zur Verfügung gestellt, die eine Benutzung bei weit in Richtung Boden reichender Vegetation oder auch herabhängenden Ästen oder unter Gebüsch ermöglichen, da eine niedrige Bauhöhe erzielt wird. Die Einstellvorrichtung erlaubt ein schnelles und einfaches Einstellen bzw. Verstellen der Arbeitshöhe, wobei die Genauigkeit der Einstellung einfach sichergestellt werden kann. An dem Anbaugerät sind zwei Halter vorgesehen, die jeweils eine Mehrzahl von Durchbrüchen aufweisen, die mit verschiedenen Arbeitshöhen des Anbaugeräts derart korrespondieren, dass die Arbeitshöhen durch eine Auswahl von bestimmten Durchbrüchen und deren Zusammenwirken mit Befestigungsmitteln festgelegt bzw. bestimmt werden können. Bei dem Arbeitsgerät handelt es sich vorzugsweise um ein Mähwerk, das insbesondere als ein Sichelmähwerk mit einem oder auch mit mehreren Schneideinrichtungen bzw. Messern ausgeführt sein kann. Es kann sich hierbei beispielsweise um ein Mähwerk mit Heck- oder Seitenauswurf oder auch um ein Mulchmähwerk handeln. Es ist aber auch die Verwendung in Verbindung mit anderen Anbaugeräten, wie beispielsweise Kehr- oder Räumeinrichtungen oder auch anderen Arbeitsgeräten insbesondere zur Rasen-, Garten- und Grundstückspflege denkbar. Das Fahrzeug bzw. Gerät, an dem ein mit einer Einstellvorrichtung versehenes Anbaugerät eingesetzt bzw. angebaut wird, kann beispielsweise in der Art eines handgeführten oder handgeschobenen Mähgeräts oder auch als ein Fahrzeug, beispielsweise als ein Aufsitzmäher, Rasentraktor, Frontmäher etc. ausgebildet sein.

Auf der Oberseite des Anbaugeräts kann sowohl ein zu einer schwenkbaren Lagerung geeigneter Halter als auch ein zweiter von diesem beabstandeter Halter angebracht sein. Zwischen den Haltern ist ein Positionierarm vorgesehen. Einenends ist der Positionierarm schwenkbar an dem Halter angebracht, beispielsweise indem er in einem inneren Kanal des Halters vorgesehen ist. Der Halter kann hierzu beispielsweise zwei unabhängige Seitenteile aufweisen oder auch in der Art eines zumindest im wesentlichen U-förmigen Bauteils ausgeführt sein. Von diesem Halter beabstandet greift der weitere Halter an dem Positionierarm, vorzugsweise in einem Mittenbereich desselben, an. Andernends ist der Positionierarm mit einem Freilaufrad versehen, das den Boden berührt. Wenn der Positionierarm mit beiden Haltern verbunden ist, kann er derart angeordnet sein, dass die Oberseite eines oder beider Halter zumindest im Wesentlichen auf gleicher Höhe wie die Oberseite des Positionierarms bzw. unterhalb derselben angeordnet ist. Auf diese Weise wird eine niedrige Bauhöhe begünstigt, die die Wahrscheinlichkeit herabsetzt, dass die Einstellvorrichtung, das Anbaugerät bzw. einzelne Bauteile an tief herabhängender Vegetation, wie beispielsweise an Gebüsch, hängenbleibt.

Jeder Halter weist Einstellmittel auf, die mit Befestigungsmitteln zusammenwirken, um eine schnelle und einfache genaue Einstellung des Anbaugeräts zu ermöglichen. An beiden Haltern ist eine Mehrzahl von Durchbrüchen vorgesehen, um das Niveau der Arbeitshöhe variieren zu können. Die Durchbrüche sind in korrespondierenden Gruppen angeordnet sein, die derart zusammenwirken, dass die Halter eine Einstellung und Sicherung des Positionierarms in mehreren, beispielsweise drei getrennten Arbeitshöhenbereichen ermöglicht. In einer bevorzugten Ausführungsform weist jeder Bereich sechs verschiedene Arbeitshöhen auf, aus denen ein Benutzer bei einer Einstellung des Anbaugeräts auswählen kann. Da es wünschenswert ist, ein vollständiges Neueinstellen bzw. An- und Abbauen des Positionierarms an beiden Haltern zu vermeiden, sind Überlappungsbereiche der Arbeitshöhen zwischen den Gruppen vorgesehen. Dies ermöglicht es dem Benutzer, die derzeitige Einstellung in einem der Halter beizubehalten und bestimmte korrespondierende Arbeitshöhen aus den Bereichen des anderen Halters auszuwählen. Entsprechend kann ein Benutzer eine präzise Höheneinstellung eines Anbaugeräts, das über eine Freilaufrad-Positionierarm-Anordnung verfügt, erzielen.

In der Zeichnung ist ein nachfolgend näher beschriebenes Ausführungsbeispiel der Erfindung dargestellt. Es zeigt:
- Fig. 1: eine Seitenansicht eines Fahrzeugs mit einem an seiner Vorderseite angebrachten Mähwerk bzw. einem Anbaugerät,
- Fig. 2: eine perspektivische Ansicht des Anbaugeräts von oben,
- Fig. 3: eine perspektivische Teilansicht eines rückwärtigen Bereichs des Anbaugeräts,
- Fig. 4: eine Teilansicht des Anbaugeräts mit einem Positionierarm,
- Fig. 5: eine Teilansicht des Anbaugeräts mit dem Positionierarm von oben,
- Fig. 6: eine schematische Darstellung einer Einstellvorrichtung, die eine Schnitthöheneinstellung ermöglicht, und
- Fig. 7: eine perspektivische Darstellung eines Halters und eines Befestigungsteils der Einstellvorrichtung.

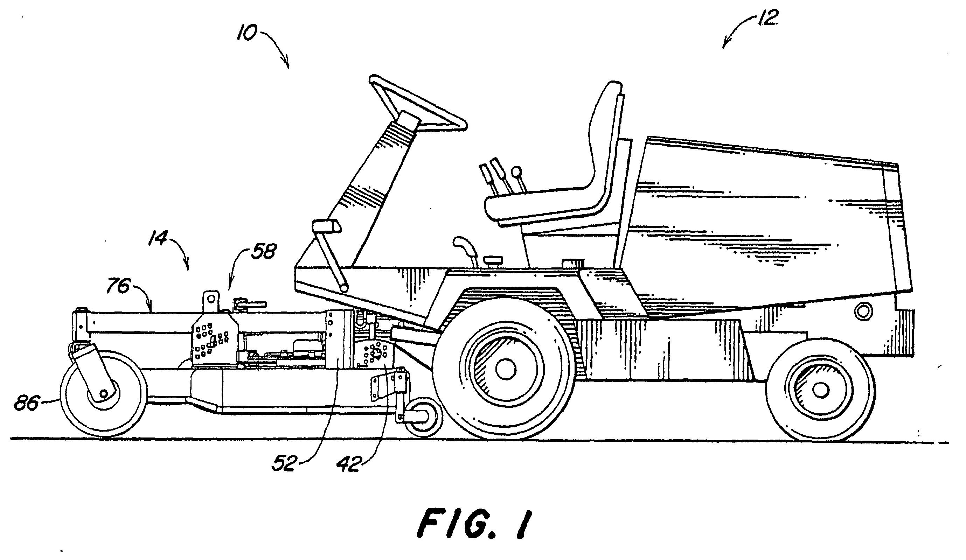

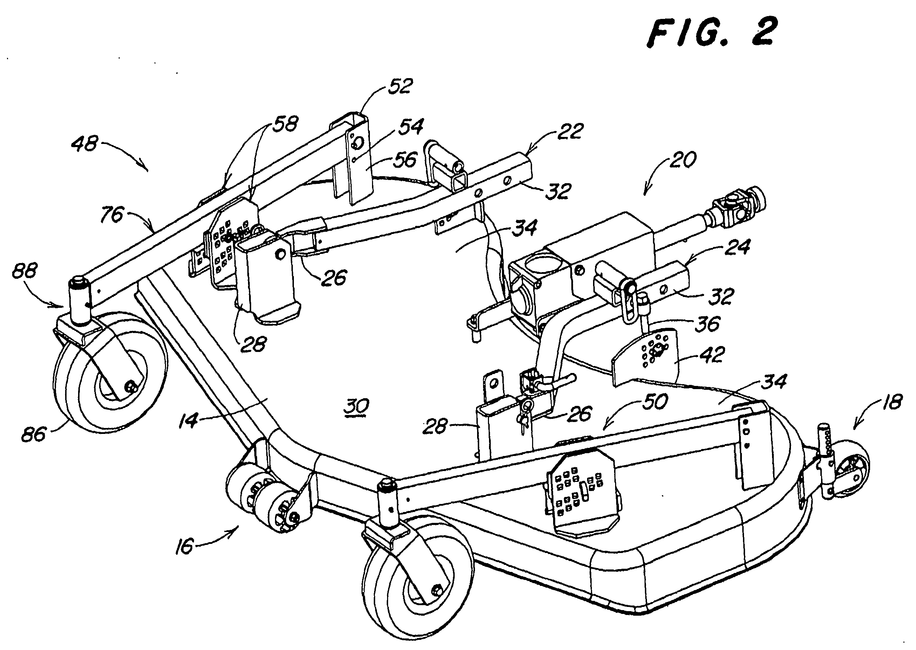

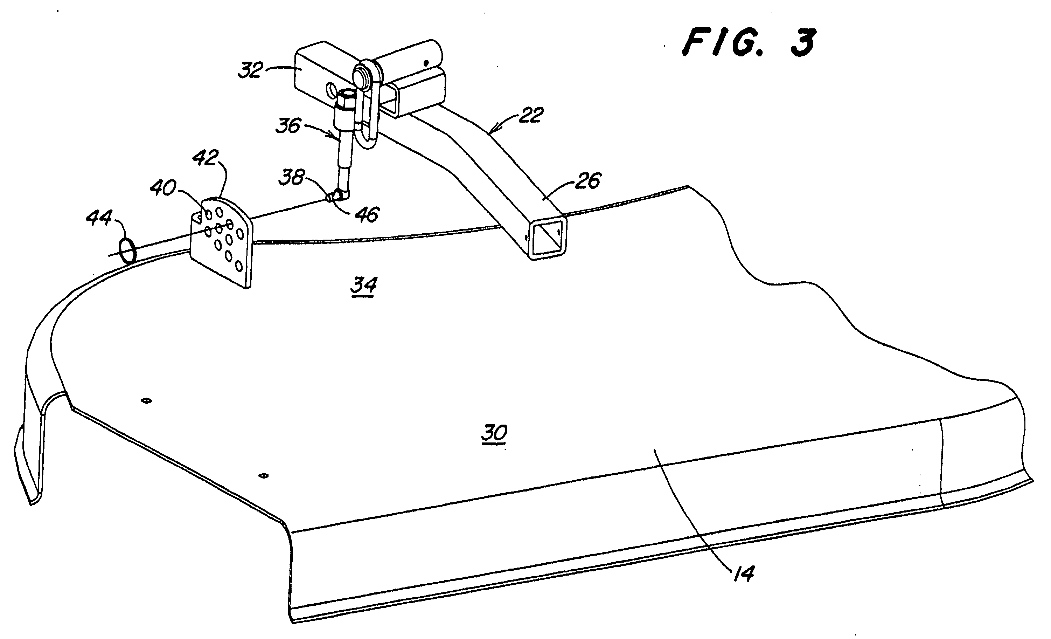

Es wird zuerst auf die Figuren 1 und 2 Bezug genommen, die ein Mähgerät bzw. ein Gerät 10 mit einem antreibenden Bereich und einem angetriebenen Bereich zeigen. Der antreibende Bereich ist vorzugsweise in der Art eines Fahrzeugs 12 bzw. eines Traktors ausgebildet, das mit dem angetriebenen Bereich verbunden ist, welcher als ein an der Frontseite vorgesehenes Mähwerk bzw. Anbaugerät 14 ausgebildet ist, welches mit einem Paar vorderer Stützräder 16 und einem einzelnen rückwärtigen Stützrad 18 ausgestattet ist. Zwischen dem Fahrzeug 12 und dem Anbaugerät 14 ist eine Zapfwelle (PTO) 20 vorgesehen, um ein nicht gezeigtes Messer des Anbaugeräts 14 anzutreiben. Ein Paar von Tragarmen 22, 24 ist mit seinem ersten Endbereich 26 mit einem Schweißteil 28, das in einem Frontbereich 30 des Anbaugeräts 14 angeordnet ist, verbunden. Die zweiten Endbereiche 32 der Tragarme 22, 24 sind mit einem Heckbereich 34 des Anbaugeräts 14 über L-förmige, steife Streben 36, siehe auch Fig. 3, verbunden, welche untere Schenkel 38 aufweisen, welche durch runde Durchbrüche 40 aufgenommen werden können, die in abstehenden bzw. sich von vorn nach rückwärts erstreckenden Haltern 42 vorgesehen sind. Diese Halter 42 ermöglichen eine Höheneinstellung des Heckbereichs 34 des Anbaugeräts 14 mit Bezug zu dem Frontbereich 30. Die Durchbrüche 40 stellen Zunahmen der Schneidhöhe von einem halben Inch (1,27 cm) dar. In Figur 3, welche einen einzelnen Tragarm 22 und einen ersten Halter 42 zeigt, ist die Strebe 36 mit dem abstehenden ersten Halter 42 durch ein Befestigungsmittel 44 in der Art eines Sicherungsrings befestigt, welcher in eine Öffnung 46 in dem unteren Schenkel 38 der Strebe 36 eingesetzt werden kann.

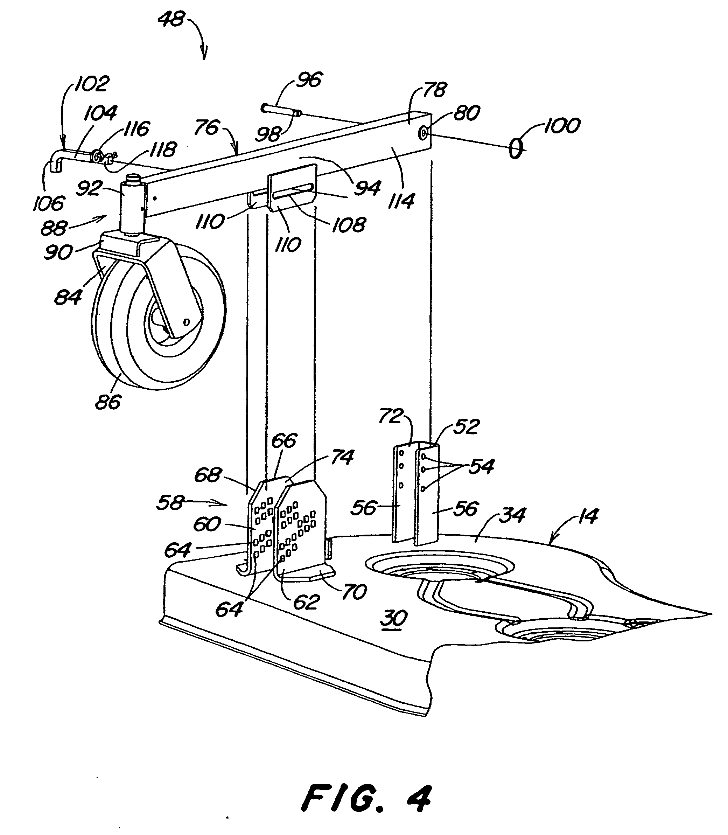

Konzentriert man sich nun auf die Figuren 2 und 4, so weist das Anbaugerät 14 rechte und linke Einstellmittel 48, 50 zum Einstellen der Frontseite des Anbaugeräts 14 auf. Da die rechten und linken Einstellmittel 48, 50 spiegelbildlich ausgebildet sind, wird im folgenden nur das rechte Einstellmittel 48 genau beschrieben werden. Das Einstellmittel 48 weist einen U-förmigen Halter 52 auf, welcher an dem Heckbereich 34 einer Oberseite des Anbaugeräts 14 angebracht ist. In jedem Seitenbereich 56 des Halters 52 sind Durchbrüche 54 vorgesehen. Darüber hinaus ist ein Halter 58 in Form einer Strebenanordnung, welche vorzugsweise erste und zweite abstehende Platten 60, 62 aufweist, welche voneinander beabstandet sind und Durchbrüche 64 durch sich hindurch wie auch ein abgeflachtes Profil bzw. eine solche Oberseite 66 aufweisen. Zwei Seitenbereiche 68 sind in einem Winkel von 45° von der Oberseite 66 nach unten geneigt, um es Zweigen oder anderer Vegetation zu erlauben, darüber und an den beiden Seiten 68 vorbei zu gleiten. Eine Unterseite jeder der Platten 60, 62 ist mit einem Flanschbereich 70 versehen, um ein Anbringen an dem Mähwerk 14 zu ermöglichen. Wenn sie auf dem Mähwerk 14 positioniert sind, sind die Platten 60, 62 einander so direkt gegenüber angeordnet, dass ihre Flanschbereiche 70 sich nicht berühren.

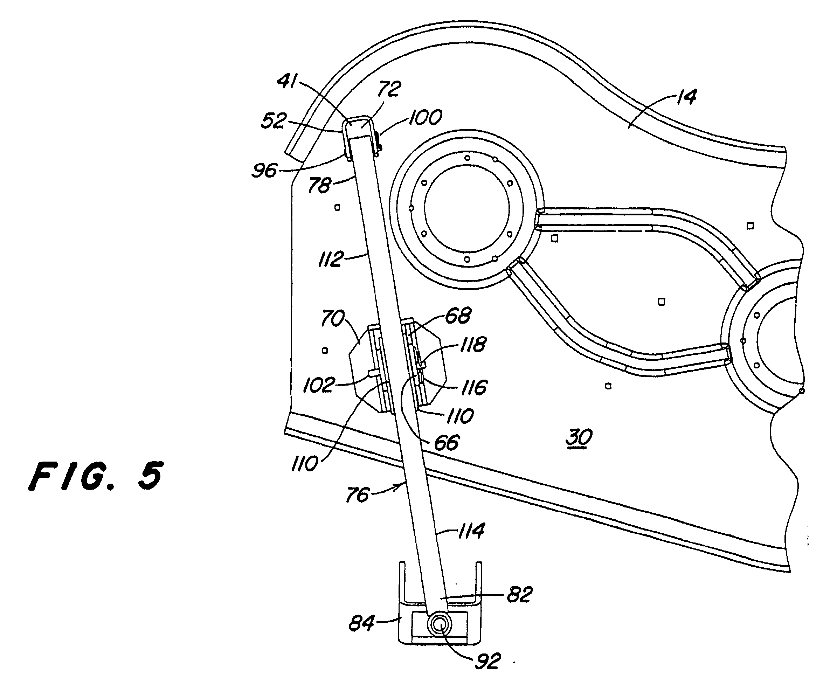

Wie es in den Figuren 4 und 5 dargestellt wird, ist in inneren Kanälen 72, 74 von beiden Haltern 52, 58, jeweils ein Positionierarm 76 vorgesehen. Ein Endbereich 78 des Positionierarms 76 weist eine Aussparung 80 durch sich hindurch auf. In einem vorderen Endbereich 82 weist der Positionierarm 76 eine Leitvorrichtung 84 zur Stütze eines Freilaufrads 86 auf. Das Freilaufrad 86 ist mit dem Positionierarm 76 durch ein Verbindungsmittel 88 verbunden, welches vorzugsweise eine Halterung 90 mit einem daran vorgesehenen Spindelbereich 92 aufweist.

Der Positionierarm ist mit seinem rückwärtigen Endbereich 78 mit dem Halter 52 und einem Mittenbereich 94 des Halters 58 gesichert. Wie es aus den Figuren 4 und 5 ersehen werden kann, ist an dem rückwärtigen Endbereich 78 des Positionierarms 76 ein Befestigungsmittel 96 in Form eines eine Öffnung 98 aufweisenden Stifts vorgesehen, welches sich durch Durchbrüche 54 hindurcherstreckt, die in dem Halter 52 vorgesehen sind, und sich in die Aussparung 80 in dem Positionierarm 76 hinein erstreckt. Nachdem es vollständig durch den Halter 52 hindurchgelangt ist, wird ein zweites Befestigungsmittel 100, das in der Art eines Sicherungsrings ausgeführt ist, in die Öffnung 98 in dem Befestigungsmittel 96 eingeführt wird, um den Positionierarm 76 an dem Halter 52 zu sichern. Der Mittenbereich 94 des Positionierarms 76 wird an dem Halter 58 durch ein als Stift ausgeführtes Befestigungsmittel 102 gesichert, welches vorzugsweise eine L-förmige Ausbildung bestehend aus einem oberen und einem unteren Schenkel 104, 106 aufweist. Das Befestigungsmittel 102 erstreckt sich durch die erste Platte 60 und durch Schlitze 108, die in Fixierplatten 110, die an jedem Seitenbereich 112, 114 des Positionierarms 76 vorgesehen sind, um in den in dem Halter 58 vorgesehenen Durchbrüchen 64 einzurasten. Nachdem er durch die Schlitze 108 und Durchbrüche 64 in der zweiten Platte 62 hindurch gelangt ist, wird das Befestigungsmittel 102 dann durch ein Rückhaltemittel 116, das als ein Federsplint ausgebildet ist, der sich durch eine Öffnung 118 in dem Befestigungsmittel 102 erstreckt, gesichert. Nachdem es durch die Öffnung 118 gelangt ist, verspannt sich das Rückhaltemittel 116 gegenüber der zweiten Platte 62, um den Positionierarm 76 an seinem Platz zu halten.

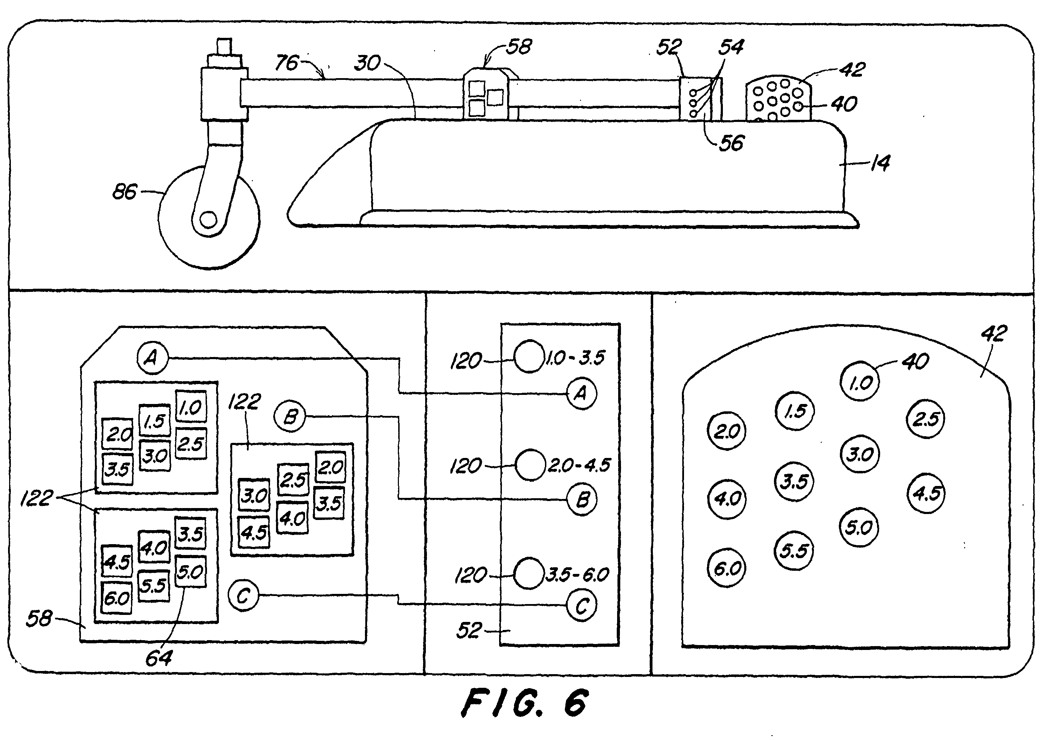

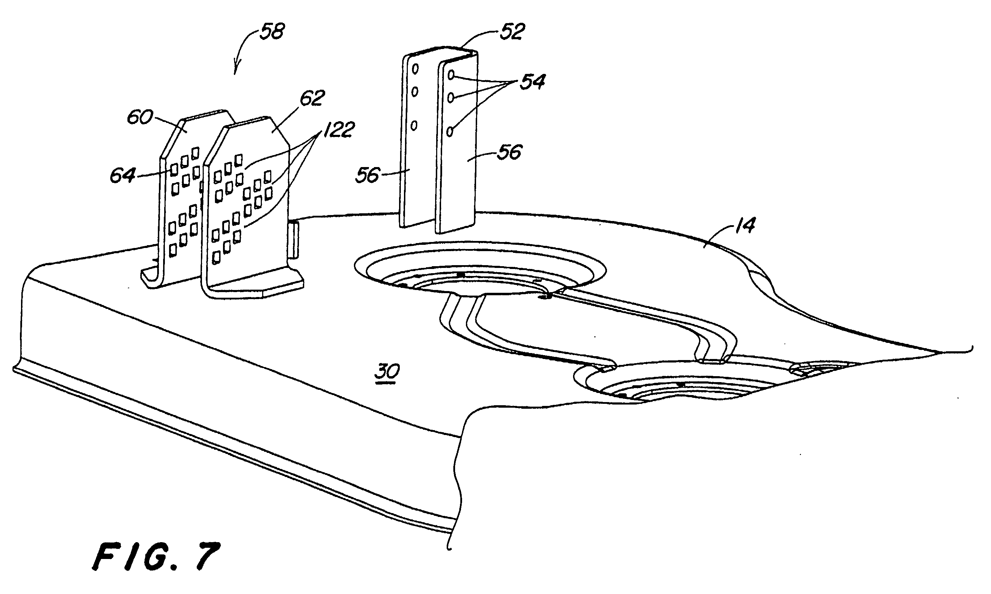

Es werden nun die Figuren 6 und 7 betrachtet, in denen die Anordnung im Detail gezeigt wird, welche eine Spanne von Arbeitshöhen zur Verfügung stellt, innerhalb derer eine bestimmte Arbeitshöhe ausgewählt werden kann. Wie es in Fig. 6 gesehen werden kann, sind sowohl in dem Halter 52 als auch in dem Halter 58 separate und leicht unterscheidbare Anordnungen vorgesehen, welche mit den gewählten Schneidhöhen korrespondieren, welche von einem Inch (2,54 cm) bis zu 6 Inch (15,24 cm) in Schritten von einem halben Inch (1,27 cm) reichen. Der U-förmige Halter 52 weist vertikal beabstandete Durchbrüche 54 auf. Die Durchbrüche 54 in jedem Seitenbereich 56 sind horizontal ausgerichtet, um das Befestigungsmittel 96 aufzunehmen und um drei Paare bzw. Gruppen 120 von Einstellmöglichkeiten zur Verfügung zu stellen. In der bevorzugten Ausführungsform bestimmt jede horizontale ausgerichtete Gruppe 120 Schnitthöhenbereiche, die 1,0 - 3,5 Inch (2,54 - 8,89 cm), 2,0 - 4,5 Inch (5,08 - 11,43 cm) und 3,5 - 6,0 Inch (8,89 - 15,24 cm) jeweils von oben nach unten entsprechen. Andere Bereiche können natürlich, wie gewünscht, zur Verfügung gestellt werden. Es wird nun Fig. 6 betrachtet, die zeigt, dass der Halter 58 drei zusätzliche Gruppen 122 von Durchbrüchen 64 mit Auswahlbereichen aufweist, die mit denen des Halters 52 korrespondieren. Jede Gruppe 120 in dem Halter 52 und in dem Halter 58 arbeitet als ein "Satz", wie es in Fig. 6 als A, B und C ersehen werden kann, zusammen, um einen bestimmten Bereich zur Verfügung zu stellen, innerhalb dem ein Benutzer während der Rasen-, Garten- bzw. Grundstückspflege auswählen kann. Durch diese Art von Zusammenarbeit bei der der Positionierarm 76 in einer höheren vertikalen "Stellung" zwischen dem Halter 52 und dem Halter 58 angeordnet ist, wird der Positionierarm 76 sich von dem Anbaugerät 14 weg bewegen, wenn das Anbaugerät eingestellt wird, um sich in Richtung des Untergrunds zu bewegen, und umgekehrt.

Insofern als der Halter 58 ausgeführt ist, um eine Höheneinstellung des Arbeitsgeräts 14 zu bewerkstelligen, werden die drei Gruppen 122 vorgesehen, um mit den drei vorgesehenen Gruppen 120 in dem Halter 52 zusammenzuarbeiten, um eine Auswahl "korrespondierender" Arbeitshöhenbereiche zu erlauben. Der Begriff "korrespondierend" kennzeichnet eine Beziehung zwischen den gleichen Höhenbereichen in beiden, dem Halter 52 und dem Halter 58. Jede Gruppe 122 des Halters 58 ist in Form gestaffelter oder gestufter Reihen und Spalten ausgebildet, wie dies in Figur 6 gesehen werden kann. In jeder existieren zwei Reihen und drei Spalten, die eine Auswahl von sechs bestimmten Arbeitshöhen bieten. In den drei Gruppen 122 sind wenigstens zwei der sechs Arbeitshöhen innerhalb einer Gruppe 122 im Vergleich mit den übrigen der verbleibenden zwei Gruppen 122 nur einmal vorhanden. Die übrigen verbleibenden Auswahlen liefern eine Überlappung, die aus der höchsten bzw. den höchsten Auswahlen, die in einer anderen der bestimmten Gruppen 122 verfügbar sind, bestehen. Solch eine Überlappung erlaubt es dem Benutzer, eine Demontage zu vermeiden, wenn bestimmten Schnitthöhen innerhalb des höchsten Bereichs ausgewählt werden sollen. Beispielsweise kann es vorkommen, dass während eines Betriebs in einem Bereich des Halters 52 zwischen 2,0 bis 4,5 Inch (5,08 - 11,34 cm) oder 3,5 bis 6,0 Inch (8,89 - 15,24 cm), der Benutzer die Schnitthöhe, die 3,5 Inch (8,89 cm) entspricht auswählen möchte, welche die letzte Auswahl, die innerhalb der ersten Gruppe auswählbar ist, darstellt.

Folglich tritt eine bevorzugte Einstellung auf, um eine gleiche Schnitthöhe zu erhalten, wenn der Heckbereich des Anbaugeräts 14 eingestellt wird, indem die Höhe des Tragarms 22 verändert wird und der untere Schenkel 38 (Fig. 3) der Strebe 36 in einen gewünschten Durchbruch 40 des Halters 42 plaziert wird, siehe ebenfalls Fig. 6. Nachdem eine solche Plazierung durchgeführt wurde, wird die Strebe 36 an dem Halter 42 gesichert, indem das Befestigungsmittel 44 in die Öffnung 46 eingesetzt wird. Im Anschluss beginnt der Benutzer mit der Einstellung des Frontbereichs 30 des Anbaugeräts 14, indem aus den vorgegebenen Gruppen 120, 122 sowohl in dem Halter 52 als auch dem Halter 58 jeweils ausgewählt wird. Sobald eine Auswahl getroffen wurde, wird der Positionierarm 76 in einen gewünschten Durchbruch 54 in dem Halter 52 eingesteckt und in das Zentrum der beiden gegenüberliegenden Platten 60, 62 des Halters 58 geschwenkt. Nachdem er in Position geschwenkt wurde, erhalten die Oberseiten der Halter 52, 58 ein Profil aufrecht, das im wesentlichen auf gleicher Höhe wie oder unterhalb der Oberseite des Positionierarms 76 angeordnet ist, wenn eine Höhenauswahl, die zumindest in zwei der Gruppen 122 fällt, gewählt wurde. Der Benutzer wird dann die Gruppe 122 innerhalb der Platten 60, 62 ausmachen, die mit dem zuvor in dem Halter 52 ausgewählten Bereich korrespondiert und unter den bestimmten Höhenoptionen, die darin angeboten werden, wählen. Das Befestigungsmittel 102 wird dann dazu verwendet, den Durchbruch 64 des Halters 58 auszuwählen, der die gewünschte Schnitthöhe bestimmt. Als nächstes wird das Befestigungsmittel 102 durch die Schlitze 108, die in den Fixierplatten 110 enthalten sind, hindurchgeführt, welche mit der Durchbrüchen 64 übereinstimmen. Nach dem Durchführen durch die rechte Platte 62 wird das Rückhaltemittel 116, das als ein Federsplint ausgeführt ist, dazu verwendet, das Befestigungsmittel 102 zu sichern, wenn es gegen die zweite Platte 62 verspannt.

In der vorliegenden Form der Erfindung, wird es in Erwägung gezogen, dass die Durchbrüche 64, die in dem Halter 58 vorgesehen sind, durch quadratische Anordnungen gebildet werden, die zu dem verwendeten Befestigungsmittel 102 kompatible sind, welches ebenfalls einen quadratischen Querschnitt aufweist, um ein Verrutschen, Drehen und/oder ein Lose-Sein nach dem Befestigen zu verhindern. Es wird ebenfalls bevorzugt, dass sowohl der Halter 52, 58 als auch der Positionierarm 76 aus Stahl ausgeführt wird, um die Stärke der Einstellvorrichtung sicherzustellen.

Darüber hinaus ist das Stützrad 18, wie es in Fig. 2 gezeigt wird, an einer rückwärtigen Kante des Anbaugeräts 14 angebracht, und der Benutzer kann es, nachdem er das Anbaugerät 14 auf eine gleichmäßige Arbeitshöhe eingestellt hat, auf einen wünschenswerten Abstand zum Boden positionieren. Eine Einstellung des Stützrades 18 kann durch eine optische Überprüfung eines notwendigen Abstandes durchgeführt werden, wobei die Höheneinstellung in Schritten von Abständen von einem halben Inch (1,27 cm) vorgesehen wird.

Mit der vorliegenden Erfindung wird eine einfach zu handhabende Einstellvorrichtung zur Verfügung gestellt, die es dem Benutzer erlaubt, das Anbaugerät unter tief herabhängender Vegetation und Gebüsch zu positionieren. Ein weiterer Vorteil der vorliegenden Erfindung besteht in der Möglichkeit, den gewünschten Arbeitshöhenbereich schnell, durch eine optische Überprüfung zu bestimmen. Durch diese Vorteile wird der Benutzer befähigt, den Aufwand an Zeit und Anstrengung, der notwendig ist, um persönliche und/oder professionelle Rasen-, Garten- bzw. Grundstückspflege durchzuführen, zu reduzieren.

Obwohl die vorliegende Erfindung mit Bezug auf eine bestimmte Ausführungsform beschrieben wurde, soll es klar sein, dass viele Alternativen, Veränderungen und Variationen für den Fachmann im Licht der vorangegangen Beschreibung offensichtlich sein werden. Entsprechend ist es beabsichtigt, dass die Erfindung alle solchen Alternativen, Veränderungen und Variationen, welche in den Geist und Bereich der folgenden Ansprüche fallen, umfasst.

## Patentansprüche

1. Anbaugerät (14), insbesondere ein Mähwerk, mit einer Einstellvorrichtung mit wenigstens einem an dem Anbaugerät (14) angebrachten Halter (52), der eine Mehrzahl von Durchbrüchen (54) aufweist, und wenigstens einem Positionierarm (76), der einenends schwenkbar mit dem Anbaugerät (14) und andernends mit wenigstens einem Freilaufrad (86) verbindbar ist, wobei der Positionierarm (76) mit dem Halter (52) durch wenigstens ein mit wenigstens einem der Durchbrüche (54) zusammenwirkenden Befestigungsmittel (102) lösbar verbindbar ist und mit einen weiteren Halter (58), der an dem Anbaugerät (14) von dem ersten Halter (52) beabstandet vorgesehen ist und der eine Mehrzahl von Durchbrüchen (64) aufweist, mit denen der Positionierarm (76) selektiv durch wenigstens ein zweites Befestigungsmittel (96) verbindbar ist, wobei die Durchbrüche (54, 64) in den Haltern (52, 58) derart angeordnet sind, dass sie zumindest zwei Arbeitshöhen des Anbaugeräts (14) bestimmen können, **dadurch gekennzeichnet, dass** die Durchbrüche (54, 64) an wenigstens einem der Halter (58) in Gruppen (120, 122), vorzugsweise in Reihen und/oder Spalten, angeordnet sind, welche jeweils mit wenigstens einem der Durchbruche (54) des weiteren Halters (52) korrespondiert, so dass bei Verstellung der Arbeitshöhe ein vollständiges Neueinstellen des Positionierarms an beiden Haltern (52, 58) vermieden werden kann.

2. Anbaugerät nach Anspruch 1, **dadurch gekennzeichnet, dass** wenigstens eine Oberseite des Positionierarms (76) zumindest im Wesentlichen auf gleicher Höhe bzw. unterhalb der Oberseite (66) der Halter (52, 58) angeordnet werden kann.

3. Anbaugerät nach Anspruch 1 oder 2, **dadurch gekennzeichnet, dass** der Halter (52) zwischen dem Freilaufrad (86) und dem weiteren Halter (58) angeordnet ist.

4. Anbaugerät nach einem oder mehreren der vorherigen Ansprüche, **dadurch gekennzeichnet, dass** zumindest einer der Halter (52, 58) wenigstens einen von dem Anbaugerät (14) abstehenden Seitenbereich (68) aufweist, welcher vorzugsweise einen abgewinkelten Flanschbereich (70) zur Verbindung mit dem Anbaugerät (14) aufweist.

5. Anbaugerät nach einem oder mehreren der vorherigen Ansprüche, **dadurch gekennzeichnet, dass** die Durchbrüche (54, 64) in den Haltern (52, 58) zumindest im Wesentlichen zueinander parallel ausgerichtet sind.

6. Anbaugerät nach einem oder mehreren der vorherigen Ansprüche, **dadurch gekennzeichnet, dass** der Positionierarm (76) vorzugsweise in einem Seitenbereich (112, 114) mit wenigstens einer Fixierplatte (110) versehen ist, welche eine Aussparung bzw. einen Schlitz (108) zum Zusammenwirken mit dem Befestigungsmittel (102) aufweist.

7. Anbaugerät nach einem oder mehreren der vorherigen Ansprüche, **dadurch gekennzeichnet, dass** die Durchbrüche (54, 64) in dem weiteren Halter (58) eckig, vorzugsweise im wesentlichen quadratisch ausgeführt sind.

8. Anbaugerät nach einem oder mehreren der vorherigen Ansprüche, **dadurch gekennzeichnet, dass** der Positionierarm (76) mit den Haltern (52, 58) derart verbindbar ist, dass er um eine sich durch den ersten Halter (52) erstreckende Achse, welche zumindest im wesentlichen quer zu einer Längsachse des Positionierarms (76) angeordnet ist, verschwenkbar ist.

9. Anbaugerät nach einem oder mehreren der vorherigen Ansprüche, **dadurch gekennzeichnet, dass** der Halter (52) in einem bezogen auf eine übliche Arbeitsrichtung des Anbaugeräts (14) rückwärtigen Bereich des Anbaugeräts (14) angeordnet ist.

10. Gerät bzw. Fahrzeug (12), insbesondere zur Rasen-, Garten- bzw. Grundstückspflege mit wenigstens einem Anbaugerät (14) nach einem oder mehreren der vorherigen Ansprüche, das vorzugsweise als ein Mähwerk ausgebildet ist, und wenigstens einem Tragarm (22, 24) zur Verbindung des Anbaugerät (14) mit dem Gerät bzw. Fahrzeug (12).

11. Gerät bzw. Fahrzeug nach Anspruch 10, **dadurch gekennzeichnet, dass** das Anbaugerät (14) einen weiteren Halter (42) mit vorzugsweise einer Mehrzahl von Durchbrüchen (40) aufweist, welche durch wenigstens ein Befestigungsmittel (44) selektiv mit dem Tragarm (22, 24) verbindbar sind.

## Claims

1. An attachment (14), especially a mower mechanism, with an adjusting device having at least one bracket (52) fitted on the attachment (14) and having a plurality of openings (54), and at least one positioning arm (76) which is connected pivotally at one end to the attachment (14) and can be connected at the other end to at least one free running wheel (86), wherein the positioning arm (76) can be attached releasably to the bracket (52) by at least one attaching means (102) cooperating with at least one of the openings (54), and with a further bracket (58) which is provided on the attachment (14), spaced from the first bracket (52) and which has a plurality of openings (64) with which the positioning arm (76) can be connected by at least one second attaching means (96), wherein the openings (54, 64) in the brackets (52, 58) are so arranged that they can determine at least two working heights of the attachment (14), **characterized in that** the openings (54, 64) are arranged in at least one of the brackets (58) in groups (120, 122), preferably in rows and/or columns, which correspond respectively with at least one of the openings (54) of the further bracket (52), so that complete readjustment of the positioning arm (76) at both brackets (52, 58) can be avoided in an adjustment of the working height.

2. An attachment according to claim 1, **characterized in that** at least one upper side of the positioning arm (76) can be arranged at least substantially at the same height as or below the upper side (66) of the brackets (52, 58).

3. An attachment according to claim 1 or 2, **characterized in that** the bracket (52) is arranged between the free running wheel (86) and the further bracket (58).

4. An attachment according to one or more of the preceding claims, **characterized in that** at least one of the brackets (52, 58) has at least one side region (68) projecting from the attachment (14), which region preferably comprises a bent flange region (70) for the connection to the attachment (14).

5. An attachment according to one or more of the preceding claims, **characterized in that** the openings (54, 64) in the brackets (52, 58) are aligned at least substantially parallel to one another.

6. An attachment according to one or more of the preceding claims, **characterized in that** the positioning arm (76) is provided preferably in a side region (112, 114) with at least one attachment plate (110) which has a recess or slot (108) for cooperation with the attaching means (102).

7. An attachment according to one or more of the preceding claims, **characterized in that** the openings (54, 64) in the further bracket (58) are polygonal, preferably substantially square.

8. An attachment according to one or more of the preceding claims, **characterized in that** the positioning arm (76) can be so connected to the brackets (52, 58) that it can pivot about an axis extending through the first bracket (52) which is at least substantially transverse to a longitudinal axis of the positioning arm (76).

9. An attachment according to one or more of the preceding claims, **characterized in that** the bracket (52) is arranged in a rear region of the attachment (14), relative to the normal working direction of the attachment (14).

10. An implement or vehicle (12), especially for lawn, garden or plot care, with at least one attachment (14) according to one or more of the preceding claims, which is preferably in the form of a mower mechanism, and at least one support arm (22, 24) for connection of the attachment (14) to the implement or vehicle (12).

11. An implement or vehicle according to claim 10, **characterized in that** the attachment (14) comprises a further bracket (42) with preferably a plurality of openings (40), which can be selectively connected by at least one attaching means (44) to the support arm (22, 24).

## Revendications

1. Outil porté (14), en particulier une faucheuse, comportant un dispositif de réglage avec au moins un support (52), qui est monté contre l'outil porté (14) et comporte une pluralité de trous débouchants (54), et au moins un bras de positionnement (76), dont une extrémité est montée pivotante avec l'outil porté (14) et l'autre extrémité peut être reliée à au moins une roue libre (86), le bras de positionnement (76) étant propre à être relié de manière amovible au support (52) par au moins un moyen de fixation (102) coopérant avec au moins un des trous débouchants (54), et avec un autre support (58), qui est prévu au niveau de l'outil porté (14) à distance du premier support (52) et qui comporte une pluralité de trous débouchants (64), avec lesquels le bras de positionnement (76) peut être assemblé au choix par au moins un deuxième moyen de fixation (96), les trous débouchants (54, 64) dans les supports (52, 58) étant agencés de telle sorte qu'ils peuvent déterminer au moins deux hauteurs de travail de l'outil porté (14), **caractérisé en ce que** les trous débouchants (54, 64) sont agencés par groupes (120, 122), de préférence en lignes et/ou en colonnes, sur au moins l'un des supports (58), lesquels trous correspondent à au moins un des trous débouchants (54) de l'autre support (52), de telle sorte qu'en cas de réglage de la hauteur de travail il est possible d'éviter un nouveau réglage complet du bras de positionnement (76) au niveau des deux supports (52, 58).

2. Outil porté selon la revendication 1, **caractérisé en ce qu'**au moins un côté supérieur du bras de positionnement (76) peut être agencé au moins sensiblement à même hauteur ou en dessous du côté supérieur (66) des supports (52, 58).

3. Outil porté selon la revendication 1 ou 2, **caractérisé en ce que** le support (52) est agencé entre la roue libre (86) et l'autre support (58).

4. Outil porté selon une ou plusieurs des revendications précédentes, **caractérisé en ce qu'**au moins un des supports (52, 58) comporte au moins une zone latérale (68) en saillie sur l'outil porté (14), laquelle comporte, de préférence, au moins une zone à bride (70) coudée pour l'assemblage avec l'outil porté (14).

5. Outil porté selon une ou plusieurs des revendications précédentes, **caractérisé en ce que** les trous débouchants (54, 64) dans les supports (52, 58) sont au moins sensiblement parallèles les uns aux autres.

6. Outil porté selon une ou plusieurs des revendications précédentes, **caractérisé en ce que** le bras de positionnement (76) est muni, de préférence dans une zone latérale (112, 114), d'au moins une plaque de fixation (110) qui comporte un évidement, plus précisément une fente (108) pour coopérer avec le moyen de fixation (102).

7. Outil porté selon une ou plusieurs des revendications précédentes, **caractérisé en ce que** les trous débouchants (54, 64) dans l'autre support (58) ont une forme polygonale, de préférence sensiblement carrée.

8. Outil porté selon une ou plusieurs des revendications précédentes, **caractérisé en ce que** le bras de positionnement (76) peut être assemblé aux supports (52, 58) de telle sorte qu'il peut pivoter autour d'un axe passant à travers le premier support (52) et au moins sensiblement transversal à un axe longitudinal du bras de positionnement (76).

9. Outil porté selon une ou plusieurs des revendications précédentes, **caractérisé en ce que** le support (52) est agencé dans l'outil porté (14) dans une zone arrière par référence à une direction de travail habituelle de l'outil porté (14).

10. Outil ou véhicule (12), en particulier pour l'entretien de la pelouse, du jardin ou du terrain, comportant au moins un outil porté (14) selon une ou plusieurs des revendications précédentes, lequel est conçu de préférence sous forme de faucheuse, et comportant au moins un bras de support (22, 24) pour assembler l'outil porté (14) avec l'outil ou le véhicule (12).

11. Outil ou véhicule selon la revendication 10, **caractérisé en ce que** l'outil porté (14) comporte un autre support (42) avec de préférence une pluralité de trous débouchants (40), qui peuvent être assemblés au choix avec le bras de support (22, 24) par l'intermédiaire d'au moins un moyen de fixation (44).
